# EUROPEAN PATENT APPLICATION

(11) **EP 2 919 305 A1**
(43) Date of publication of application: **16.09.2015**
(21) Application number: 13863840.8
(22) Date of filing: 19.12.2013
(51) Int. Cl.: H01M 4/60

(54) **ELECTRICITY STORAGE DEVICE, ELECTRODE USED THEREIN, AND POROUS SHEET**

(30) Priority: 20.12.2012 JP 2012278152; 10.12.2013 JP 2013255265
(71) Applicant: Nitto Denko Corporation, Ibaraki-shi, Osaka 567-8680 (JP)
(72) Inventor: ABE, Masao, Ibaraki-shi Osaka 567-8680 (JP); TAKE, Hiroyoshi, Ibaraki-shi Osaka 567-8680 (JP); OTANI, Akira, Ibaraki-shi Osaka 567-8680 (JP); UETANI, Yoshihiro, Ibaraki-shi Osaka 567-8680 (JP)
(74) Representative: Hoffmann Eitle
(86) International application number: PCT/JP2013/084013
(87) International publication number: WO 2014/098165

(57) **Abstract**

In order to achieve a novel power storage device having high-speed charge/discharge and a high capacity density, an electrode which is used in the power storage device, and a porous sheet, the present invention provides a power storage device which includes an electrolyte layer 3, and a positive electrode 2 and a negative electrode 4 that are arranged with the electrolyte layer 3 interposed therebetween, wherein at least one of the positive electrode 2 and the negative electrode 4 contains a self-doping electrically conductive polymer having a carboxylic acid group.

## Description

### TECHNICAL FIELD

The present invention relates to a power storage device, an electrode used therein, and a porous sheet. More specifically, the present invention relates to a novel power storage device having high-speed charge/discharge and an excellent capacity density, an electrode used therein, and a porous sheet.

### BACKGROUND ART

With recent improvement and advancement of electronics technology for mobile PCs, mobile phones, personal digital assistants (PDAs), etc., secondary batteries and the like, which can be repeatedly charged and discharged, are widely used as power storage devices for these electronic apparatuses. It is desirable to increase the capacity of an electrode material and to provide quick charging/discharging for these secondary batteries and other electrochemical power storage devices.

An electrode for such a power storage device contains an active material which is capable of ion insertion/desertion. The ion insertion/desertion of the active material is also referred to as doping/dedoping (or may be referred to as dope/dedope), and the doping/dedoping amount per certain molecular structure of the active material is referred to as dope ratio. A material having a higher dope ratio can provide a battery having a higher capacity.

From an electrochemical viewpoint, the capacity of the battery can be increased by using an electrode material having a greater ion insertion/desertion amount. In lithium secondary batteries which are attractive power storage devices, more specifically, a graphite-based negative electrode capable of lithium ion insertion/desertion is used, in which about one lithium ion per six carbon atoms is inserted and deserted to provide a higher capacity.

Of these lithium secondary batteries, a lithium secondary battery, which has a higher energy density and, therefore, is widely used as the power storage device for the aforesaid electronic apparatuses includes a positive electrode prepared by using a lithium-containing transition metal oxide such as lithium manganese oxide or lithium cobalt oxide, and a negative electrode prepared by using a carbon material capable of lithium ion insertion/desertion, the positive electrode and the negative electrode being disposed in opposed relation in an electrolyte solution.

However, this lithium secondary battery, which generates electric energy through an electrochemical reaction, disadvantageously has a lower output density because of its lower electrochemical reaction rate. Further, the lithium secondary battery has a higher internal resistance, so that rapid discharge and rapid charge of the secondary battery are difficult. In addition, the secondary battery generally has a shorter service life, that is, a poorer cycle characteristic, because the electrodes and the electrolyte solution are degraded due to the electrochemical reaction associated with the charge and the discharge.

There is also known a lithium secondary battery, in which an electrically conductive polymer such as a polyaniline containing a dopant, is used as an electrode active material to cope with the aforesaid problem (see Patent Document 1).

In general, however, the secondary battery employing the electrically conductive polymer as the positive electrode active material is of an anion migration type in which the electrically conductive polymer is doped with an anion in a charge period and dedoped with the anion in a discharge period. Where a carbon material or the like capable of lithium ion insertion/desertion is used as a negative electrode active material, it is impossible to provide a rocking chair-type secondary battery of cation migration type in which the cation migrates between the electrodes in the charge/discharge. That is, the rocking chair-type secondary battery is advantageous in that only a smaller amount of the electrolyte solution is required, but the secondary battery employing the aforesaid electrically conductive polymer as the positive electrode active material cannot enjoy this advantage. Therefore, it is impossible to contribute to the size reduction of the power storage device.

To cope with this problem, a secondary battery of a cation migration type is proposed which is substantially free from change in the ion concentration of the electrolyte solution without the need for a greater amount of the electrolyte solution, and thus aims at improving the capacity density and the energy density per unit volume or per unit weight. This secondary battery includes a positive electrode prepared by using an electrically conductive polymer containing a polymer anion such as polyvinyl sulfonate as a dopant, and a negative electrode made of metal lithium (see Patent Document 2).

Further, it is proposed that an electrically conductive polymer in which a sulfonic acid group is imparted to a main skeleton of a polyaniline is used as a battery electrode (see Patent Document 3).

### RELATED ART DOCUMENTS

### PATENT DOCUMENTS

Patent Document 1: JP-A-HEI3(1991)-129679
Patent Document 2: JP-A-HEI1(1989)-132052
Patent Document 3: JP-A-HEI5(1993)-504153

### SUMMARY OF INVENTION

However, the secondary battery which employs the proposed electrically conductive polymer as described above is still insufficient in performance. That is, the secondary battery is lower in capacity density and energy density than the lithium secondary battery which employs the lithium-containing transition metal oxide such as lithium manganese oxide or lithium cobalt oxide for the positive electrode.

The present invention has been made in order to solve the aforementioned problems and provides a novel power storage device having high-speed charge/discharge and an excellent high-capacity density with increased dope ratio of an electrode active material by employing a self-doping electrically conductive polymer having a carboxylic acid group, in which the electrical conductivity changes in accordance with ion insertion/desertion, in an electrode, as well as an electrode used therein and a porous sheet. Here, the carboxylic acid group refers to a carboxylic acid or a salt thereof.

According to a first aspect of the present invention, there is provided a power storage device including an electrolyte layer, and a positive electrode and a negative electrode that are arranged with the electrolyte layer interposed therebetween, wherein at least one of the positive electrode and the negative electrode contains a self-doping electrically conductive polymer having a carboxylic acid group.

According to a second aspect of the present invention, there is provided a power storage device electrode containing a self-doping electrically conductive polymer having a carboxylic acid group. According to a third aspect of the present invention, there is provided a power storage device electrode porous sheet containing a self-doping electrically conductive polymer having a carboxylic acid group.

The inventors of the present invention have made repeated studies in order to achieve a power storage device having a high capacity density and a high energy density by configuring an electrode using an electrically conductive polymer. During the process thereof, the inventors of the present invention have paid attention to the electrically conductive polymer and further made repeated studies configuring this in order to improve the dope ratio. As a result of this, the inventors of the present invention have found that the power storage device characteristic is greatly improved by configuring at least one of the positive electrode and the negative electrode using a self-doping electrically conductive polymer having a carboxylic acid group.

Here, the dope ratio in the present invention means a doping/dedoping amount per certain molecular structure of the active material, as described above. Also, the self-doping polymer refers to a polymer in which a dopant is covalently bonded in a polymer chain.

In this manner, a power storage device including an electrolyte layer, and a positive electrode and a negative electrode that are arranged with the electrolyte layer interposed therebetween, wherein at least one of the positive electrode and the negative electrode contains a self-doping electrically conductive polymer having a carboxylic acid group achieves a power storage device having high performance and being excellent in high-speed charge/discharge and a capacity density per unit weight of the active material. Here, the active material refers to the self-doping electrically conductive polymer having a carboxylic acid group.

Also, when a power storage device electrode is a power storage device electrode containing a self-doping electrically conductive polymer having a carboxylic acid group, the power storage device prepared by using this electrode will be more excellent in capacity density per unit weight of the active material and capacity density per unit volume of the electrode, because this electrode exhibits a high dope ratio.

Further, when a power storage device electrode porous sheet is a power storage device electrode porous sheet containing a self-doping electrically conductive polymer having a carboxylic acid group, the power storage device prepared by using this porous sheet as an electrode will be further more excellent in capacity density per unit weight of the active material and capacity density per unit volume of the electrode.

### BRIEF DESCRIPTION OF DRAWINGS

FIG. 1 is a sectional view schematically illustrating a structure of a power storage device.
FIG. 2 shows a graph obtained by plotting the capacity retaining ratio (%) when the charge/discharge rate (C) was changed in each of the power storage devices of Example 1 and Comparative Example 1.

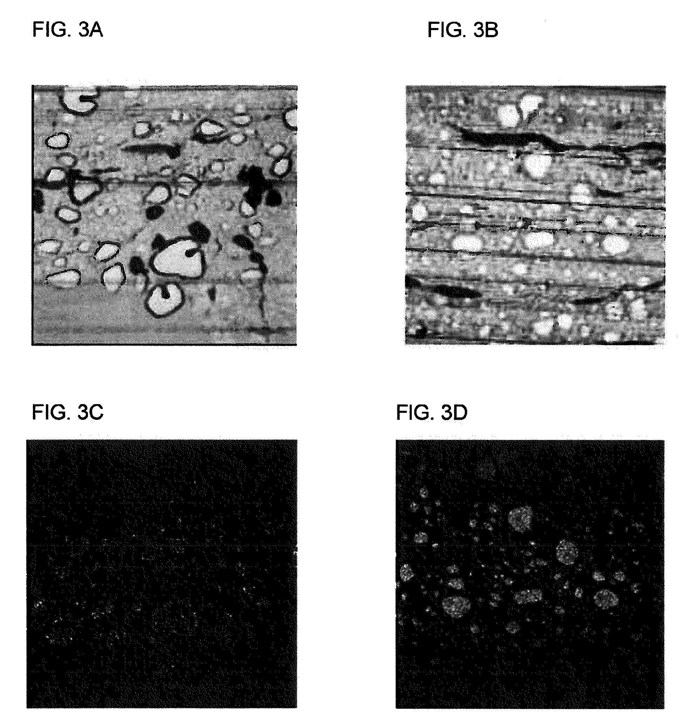

FIG. 3A to 3D show optical microscope photographs (OM images) of the cross section of the positive electrode of Example 2 in the upper row, and shows TOF-SIMS mapping images of Li ion in the lower row. FIGS. 3A and 3C show those that are in rest in a charged state (which may be hereafter referred to as "charged rest state"), and FIGS. 3B and 3D show those that are in rest in a discharged state (which may be hereafter referred to as "discharged rest state") [FIG. 3A: OM image when charged, FIG. 3B: OM image when discharged, FIG. 3C: TOF-SIMS image when charged, FIG. 3D: TOF-SIMS image when discharged].
FIG. 4A to 4D show images of the cross section of the positive electrode of Comparative Example 2 in the same manner as shown above [FIG. 4A: OM image when charged, FIG. 4B: OM image when discharged, FIG. 4C: TOF-SIMS image when charged, FIG. 4D: TOF-SIMS image when discharged].
FIG. 5 shows a graph showing a charge/discharge curve of the battery obtained in Example 2.
FIG. 6 shows an FT-IR spectrum of a self-doping polyaniline powder in a reduced-dedoped state obtained in Example 2.
FIG. 7 shows an FT-IR spectrum of a self-doping polyaniline powder in a reduced-dedoped state obtained in Example 3.
FIG. 8 shows a ¹³C-solid NMR spectrum of a self-doping polyaniline powder in a reduced-dedoped state obtained in Example 2.
FIG. 9 shows a ¹³C-solid NMR spectrum of a self-doping polyaniline powder in a reduced-dedoped state obtained in Example 3.
FIG. 10 shows a ¹³C-solid NMR spectrum of a self-doping polyaniline powder in a reduced-dedoped state obtained in Example 4.
FIG. 11 shows a ¹³C-solid NMR spectrum of a polyaniline powder in a reduced-dedoped state without having a carboxylic acid obtained in Comparative Example 2.

### DESCRIPTION OF EMBODIMENTS

Embodiments of the present invention will hereinafter be described in detail by way of example but not by way of limitation.

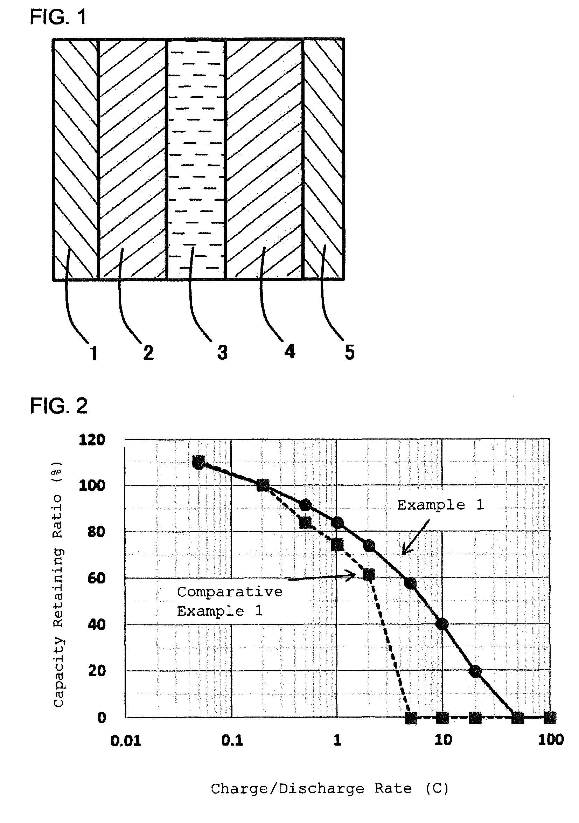

Referring to FIG. 1, the power storage device of the present invention is a power storage device including an electrolyte layer 3, and a positive electrode 2 and a negative electrode 4 that are arranged with the electrolyte layer 3 interposed therebetween, wherein at least one of the positive electrode 2 and the negative electrode 4 contains a self-doping electrically conductive polymer having a carboxylic acid group.

The greatest characteristic feature of the present invention lies in that the electrode contains a self-doping electrically conductive polymer having a carboxylic acid group as an active material. Hereafter, materials for forming the electrode will be sequentially described.

### <Self-doping Electrically Conductive Polymer Having Carboxylic Acid Group>

The self-doping electrically conductive polymer having a carboxylic acid group refers to an electrically conductive polymer in which a carboxylic acid group is added by a covalent bond to an electrically conductive polymer skeleton whose electrical conductivity changes by ion insertion/desertion. Because this electrically conductive polymer can be doped in itself, the electrically conductive polymer is what is known as a self-doping electrically conductive polymer (which may be hereafter referred to as "electrode active material"). In this manner, when a carboxylic acid group is added to a polymer skeleton, the anion of this carboxylic acid group compensates for the cation radical generated in the electrically conductive polymer skeleton during the charging, and captures the lithium cation in the electrolyte solution during the discharging. In this manner, the lithium cation is inserted/deserted into the inside of the polymer molecule, so that the amount of the electrolyte solution in the battery decreases, and the amount of the active material in the electrically conductive polymer can be increased.

As described above, the self-doping electrically conductive polymer having a carboxylic acid group refers to an electrically conductive polymer into which a carboxylic acid group is introduced by a covalent bond, and has the electrically conductive polymer as a basic skeleton. Here, the electrically conductive polymer is defined as any of a group of polymers in which the electrical conductivity of the polymer itself changes due to insertion or desertion of ion species with respect to the polymer in order to compensate for change in the electric charge that is generated or removed by an oxidation reaction or a reduction reaction occurring in a main chain of the polymer.

The polymer has a higher electrical conductivity in a doped state, and has a lower electrical conductivity in a dedoped state. Even if the electrically conductive polymer loses its electrical conductivity due to the oxidation reaction or the reduction reaction to be thereby electrically insulative (that is, in the dedoped state), the polymer can reversibly have an electrical conductivity again due to the oxidation/reduction reaction. Therefore, the electrically insulative polymer in the dedoped state is also classified into the category of the electrically conductive polymer in the present invention.

The electrically conductive polymer may also be referred to as a polymer whose electrical conductivity changes by ion insertion/desertion, and examples thereof include polyacetylene, polypyrrole, polyaniline, polythiophene, polyfuran, polyselenophene, polyisothianaphthene, polyphenylene sulfide, polyphenylene oxide, polyazulene, poly(3,4-ethylenedioxythiophene), and various derivatives of these. Particularly, polyaniline and polyaniline derivatives each having a higher electrochemical capacity are preferably used.

Examples of the aforesaid polyaniline derivatives include those prepared by substituting aniline at positions other than the 4-position thereof with at least one substituent selected from the group consisting of alkyl groups, alkenyl groups, alkoxy groups, aryl groups, aryloxy groups, alkylaryl groups, arylalkyl groups, and alkoxyalkyl groups. Among these, o-substituted anilines such as o-methylaniline, o-ethylaniline, o-phenylaniline, o-methoxyaniline, and o-ethoxyaniline, and m-substituted anilines such as m-methylaniline, m-ethylaniline, m-methoxyaniline, m-ethoxyaniline, and m-phenylaniline are preferably used. These may be used either alone or in combination.

As described above, the ion insertion/desertion of the aforesaid electrically conductive polymer is also referred to as doping/dedoping, and a material having a higher dope ratio provides a battery having a higher capacity.

The dope ratio of the polyaniline-based electrically conductive polymer is said to be about 0.5 because, among the total nitrogen, about half of the nitrogen is in a cation radical (semiquinone radical) state generated by one electron oxidation. The electrical conductivity of the polyaniline-based polymer is about 10⁻¹ to 10³ S/cm in a doped state, and is 10⁻¹⁵ to 10⁻² S/cm in a dedoped state.

In the power storage device according to the present invention, -COO in the electrically conductive polymer skeleton having a carboxylic acid group is present in the electrically conductive polymer and hence functions as a fixed dopant, thereby providing a rocking chair-type mechanism. This seems to be involved in improving the power storage device characteristic according to the present invention.

As described above, the self-doping electrically conductive polymer having a carboxylic acid group is an electrically conductive polymer into which a carboxylic acid group has been introduced. Methods for preparing this can be roughly classified into (1) a method of copolymerizing an unsubstituted monomer and a monomer substituted with a carboxylic acid and (2) a method of adding a carboxylic acid to an electrically conductive polymer.

Here, the unsubstituted monomer refers to any one of a group of monomers in synthesizing the electrically conductive polymer, and examples thereof include aniline, pyrrole, and thiophene. The monomer substituted with a carboxylic acid refers to a monomer in which the hydrogen group of the monomer such as aniline, pyrrole, or thiophene is substituted with a carboxylic acid group.

Specific examples of the monomer substituted with a carboxylic acid used in the above method (1) will be described taking a polyaniline as an example. Examples of the monomer having one carboxylic acid per one benzene ring include 2-aminobenzoic acid and 3-aminobenzoic acid, and examples of the monomer having two carboxylic acids per one benzene ring include 3-aminophthalic acid, 2-aminoisophthalic acid, 5-aminoisophthalic acid, and 2-aminoterephthalic acid. Also, the monomer substituted with a carboxylic acid may have a substituent other than a carboxylic acid; however, those having a substituent at the p-position of the amino group are not preferable because smooth oxidation polymerization may possibly be hindered.

Among these, in the case of the above method (1), the ratio of the monomer substituted with a carboxylic acid at the time of loading for polymerization is preferably 0.1 to 3 mol, more preferably 0.2 to 2.5 mol, particularly preferably 0.4 to 2.0 mol, relative to 1 mol of the unsubstituted monomer. When the ratio of the monomer substituted with a carboxylic acid is too small, there is a tendency such that a power storage device having an excellent output density cannot be obtained, whereas when the ratio is too large, there is a tendency such that a power storage device having a high output density cannot be obtained.

As the case of the above method (1), a polyaniline will be taken as an example. It is considered that copolymerization of aniline and aniline substituted with a carboxylic acid occurs by a radical coupling reaction in which a cation radical generated in the nitrogen by extraction of an unshared electron pair of an amino group by an oxidizing agent is coupled with a radical generated on a benzene ring carbon atom at the para-position of an amino group which is a canonical structure thereof. Therefore, the structure of the polymer generated by coupling of both of the cation radicals of aniline and aniline substituted with a carboxylic acid is not necessarily uniquely determined. However, since a representation of the following formula (I) showing that a substitution site of a carboxylic acid substituent is located at any position in the benzene ring is generally used, a repetition unit of the copolymer obtained by copolymerization of aniline and aniline substituted with a carboxylic acid is represented by the following general formula (II) or (III).

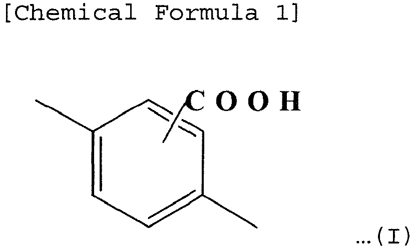

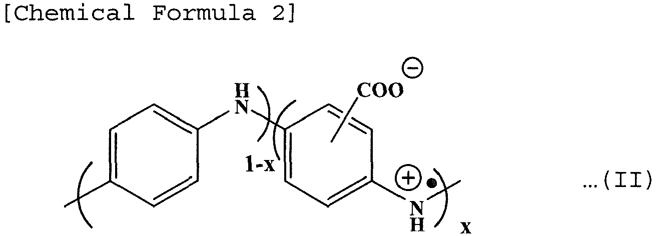

Here, x represents the molar fraction of the aniline substituted with a carboxylic acid in the copolymer, and assumes a value within the range of 0 < x < 1.

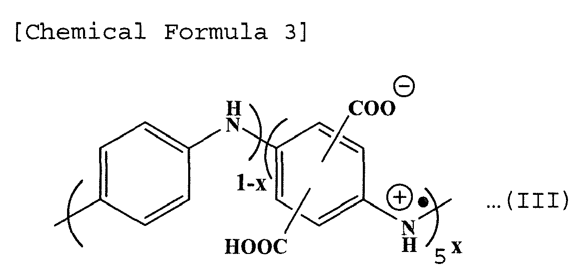

Here, x represents the molar fraction of the aniline substituted with a carboxylic acid in the copolymer, and assumes a value within the range of 0 < x < 1.

Further, the structure of a self-doping polyaniline in an oxidized-doped state obtained after the polymerization is, more specifically described, represented also by the following general formula (IV). The symbol A in the general formula (IV) represents an anion species of a protonic acid used in the polymerization and, when specified to the later-described Example 1, represents BF₄⁻ which is an anion of tetrafluoroboric acid. Furthermore, the general formula (IV) is also represented by the following general formula (V) which is a canonical structural formula thereof.

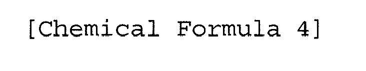

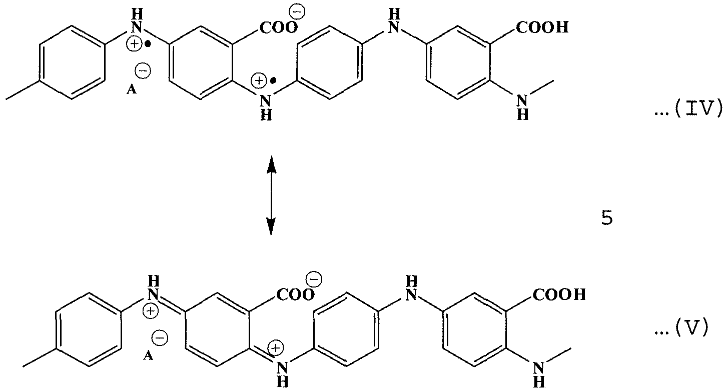

In this manner, the cation radical generated on the nitrogen atom of a self-doping polyaniline in an oxidized-doped state is compensated for by a carboxylate anion of the carboxylic acid which is a dopant linked by a covalent bond in the polymer and thereby keeps an electrically neutral state, and also is compensated for by the protonic acid anion that is simultaneously present in the system. Also, it is considered that there is a carboxylic acid that is not involved in the electric charge compensation, and this seems to have a structure of a free carboxylic acid when the polymerization is ended.

Therefore, where the protonic acid anion that is present in the system during the polymerization is mingled as a migration type dopant into the generated self-doping polyaniline may cause a problem when the secondary battery is operated by concentrating on the rocking chair mechanism of the battery, so that the self-doping polyaniline obtained by the polymerization may be subjected to an alkali treatment using lithium hydroxide to remove the protonic acid.

When the self-doping polyaniline in a doped state is subjected to an alkali treatment using lithium hydroxide to dedope the moiety doped with the protonic acid used in the polymerization, a quinonediimine structure is generated as shown in the following general formula (VI). It is preferable that, after this alkali treatment, a reduction treatment using a reducing agent is carried out to remove the quinonediimine structure from within the self-doping polyaniline. This is because, when the quinonediimine structure remains, that moiety may be inactivated as a positive electrode active material of the lithium secondary battery, and there is a possibility of decrease in the battery capacity.

With respect to a reaction in which the self-doping polyaniline in an oxidized-doped state shown in the above general formulae (IV) and (V) is subjected to an alkali treatment using lithium hydroxide and subsequently reduced with hydrazine monohydrate to obtain a self-doping polyaniline in a reduced-dedoped state, reaction formulae obtained by adding (VI) and (VII) to the above general formulae (IV) and (V) are shown as in the following. 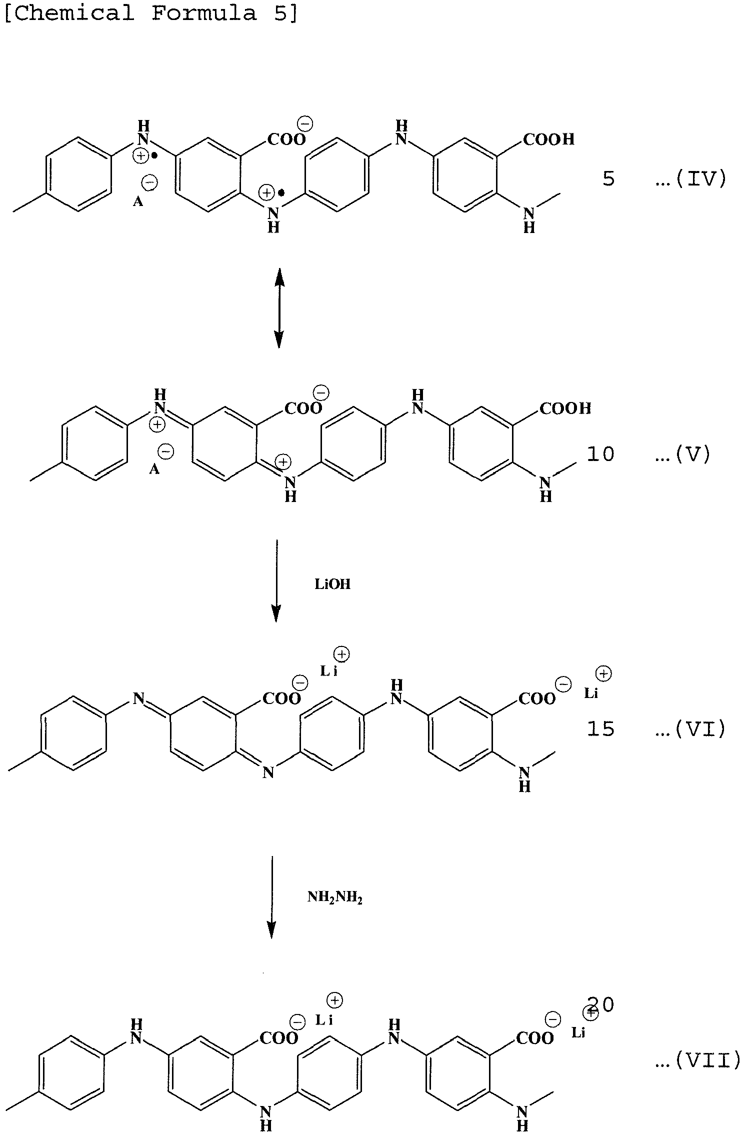 and thereafter subjected to a reduction treatment using hydrazine monohydrate. In this case, the self-doping polyaniline is dedoped by the alkali treatment and thereby turns the carboxylic acid into a lithium carboxylate salt and, for this reason, the self-doping polyaniline becomes water-soluble. The subsequent reduction treatment using hydrazine monohydrate is carried out in such a manner that the self-doping polyaniline kept being dissolved in the aqueous alkali solution is subjected to the reduction treatment in a homogeneously dissolved state.

In this manner, when the water-insoluble self-doping polyaniline obtained after the polymerization is subjected to an alkali treatment using lithium hydroxide and to a reduction treatment using hydrazine monohydrate, the self-doping polyaniline becomes water-soluble. For this reason, it is not possible to remove inorganic low-molecular-weight impurities or organic low-molecular-weight contaminants in the polymer by stirring and cleaning the ordinary polymer powder in water. Therefore, in such a case, the low-molecular-weight impurities and contaminants are removed by using a technique of "gel filtration."

Here, the "gel filtration" is a technique of separating molecules by the difference in size by passing a sample through a gel filtration carrier packed in a column. Larger molecules are eluted earlier by passing through gaps in the carrier. Small holes are present in the carrier, and smaller molecules enter the holes to be prevented from eluting rapidly, so that the smaller molecules are eluted later than the larger molecules. By utilizing this principle, various molecules can be separated.

The gel filtration carrier is made of a chemically and physically stable porous matrix that does not have reactivity or adsorptivity and hence is inactive. The pore size and the particle size distribution of the carrier are strictly controlled, and various kinds of gel filtration carriers having a variety of selectivity are commercially available.

An example of a commercially available product is SEPHADEX G-10 (manufactured by GE Healthcare Japan Co., Ltd.) which is suitable for desalination or quick group fractionation, and the cutoff molecular weight is about 1,000 as converted in terms of spherical protein.

A method of preparing a self-doping polyaniline powder in a reduced-dedoped state having a carboxylic acid group by using the above commercially available gel filtration carrier is as follows.

After the alkali treatment using lithium hydroxide and the reduction treatment using hydrazine monohydrate, the obtained aqueous solution of self-doping polyaniline in a reduced-dedoped state is subjected to filtration using a hydrophilized PTFE membrane filter having an average pore diameter of 0.2 µm, so as to remove an insoluble component. The filtrate from which the insoluble component has been removed is fractionated by a gel filtration treatment using a column filled with Sephadex G-10 as a gel filtration carrier. The aqueous solution of self-doping polyaniline having been eluted from the column is subjected to distillation for removal of water by an evaporator, so as to be concentrated, dried, and solidified, whereby a self-doping polyaniline powder having a carboxylic acid group by covalent bond is obtained in a reduced-dedoped state.

Further, as the case of the above method (1), preparation of polypyrrole having a carboxylic acid group will be taken as an example. A polypyrrole copolymer obtained by copolymerization of a pyrrole monomer having a carboxylic acid and an unsubstituted pyrrole monomer can be mentioned as an example. As the pyrrole monomer having a carboxylic acid, "pyrrole-2-carboxylic acid" (manufactured by Sigma-Aldrich Corporation) can be used.

Also, as the aforesaid method (2), preparation of a polyaniline having a carboxylic acid group will be taken as an example. There are a case in which a carboxylic acid is introduced into the benzene ring of a polyaniline, and a case in which a carboxylic acid is introduced into the nitrogen of a polyaniline. As the former, there is, for example, a method of subjecting chloroformic acid to an electrophilic substitution reaction in the presence of aluminum chloride. As the latter case of introducing a carboxylic acid into the nitrogen of a polyaniline, there is, for example, a method of extracting the hydrogen of N-H group with use of lithium hydride to form an N-anion and thereafter introducing the carboxylic acid by a nucleophilic substitution reaction with a halide having the carboxylic acid.

Further, as the material for forming the electrode, a conductive agent, a binder, and the like may be suitably blended as necessary together with the above self-doping electrically conductive polymer having a carboxylic acid group.

It is sufficient that the conductive agent is an electrically conductive material which is free from change in the properties thereof due to application of a potential in discharging the power storage device. Examples of the conductive agent include electrically conductive carbon materials and metal materials. Among these, electrically conductive carbon blacks such as acetylene black and Ketjen black, and fibrous carbon materials such as carbon fibers and carbon nanotubes are preferably used. An electrically conductive carbon black is particularly preferable as the conductive agent.

Examples of the binder include vinylidene fluoride, styrene/butadiene copolymer rubber, polyvinylpyrrolidone, PTFE (tetrafluoroethylene), styrene/butadiene/butylene copolymer obtained by hydrogenation (hydrogen addition) of styrene/butadiene copolymer rubber, styrene/ethylene/butylene copolymer, polyacrylonitrile, polyacrylonitrile/polyacrylic acid copolymer, and polyacrylonitrile/polyacrylate copolymer.

### <Electrode>

The electrode of the power storage device according to the present invention is composed of at least the self-doping electrically conductive polymer having a carboxylic acid group, and preferably formed in a porous sheet.

The electrode preferably has a thickness of 1 to 1000 µm, more preferably 10 to 700 µm. This is because, when the thickness is too small, the power storage device tends to have an insufficient capacity, whereas when the thickness is too large, ion diffusion in the inside of the electrode is less likely to occur, causing a tendency such that a desired output cannot be obtained.

The thickness of the electrode is measured by means of a dial gauge (manufactured by Ozaki Mfg. Co., Ltd.) which is a flat plate including a distal portion having a diameter of 5 mm. The measurement is performed at ten points on a surface of the electrode, and the measurement values are averaged. Where the electrode (porous layer) is provided on a current collector to be combined with the current collector, the thickness of the combined product is measured in the aforementioned manner, and the measurement values are averaged. Then, the thickness of the electrode is determined by subtracting the thickness of the current collector from the average thickness of the combined product.

The porosity (%) of the electrode can be calculated by {(apparent volume of electrode - true volume of electrode)/apparent volume of electrode} x 100, and is preferably 50 to 95%, more preferably 60 to 92%.

Here, the apparent volume of the electrode refers to "electrode area of electrode x electrode thickness," and is specifically the total sum of the volume of the substances of the electrode, the volume of the voids within the electrode, and the volume of the space of the undulating parts on the surface of the electrode. Also, the true volume of the electrode refers to the "volume of the materials constituting the electrode" and is specifically determined by calculating the average density of the whole materials constituting the electrode using the constituent weight ratio of the materials constituting the positive electrode and the value of the true density of each constituent material, and then dividing the total sum of the weight of the materials constituting the electrode by this average density.

The electrode of the power storage device according to the present invention is formed, for example, in the following manner. A self-doping electrically conductive polymer having a carboxylic acid group and being in an oxidized-doped state is dispersed in water as an electrode active material, and then a conductive agent such as an electrically conductive carbon black or a binder such as vinylidene fluoride, styrene/butadiene copolymer rubber, or polyvinylpyrrolidone is added as necessary, followed by sufficient dispersing to prepare a paste. This paste thus prepared is applied onto a current collector, and thereafter water is evaporated from the paste, whereby a sheet electrode is produced as a composite product of a mixture of the electrode active material and (optional components such as the conductive agent and the binder as necessary) on the current collector.

Here, when a self-doping electrically conductive polymer having a carboxylic acid group and being in a reduced-dedoped state is used as the electrode active material, it is not possible to use water-soluble binders or binders in a water-based emulsion state because this polymer is water-soluble. In this case, the porous sheet electrode may be produced by a dry process using PTFE as a binder, or the porous sheet electrode may be produced with use of a solvent-based binder using an organic solvent in which this polymer is not dissolved.

In the electrode thus formed, the carboxylic acid is present as a part of the electrically conductive polymer to be thereby fixed in the electrode. The carboxylic acid thus fixed around the main skeleton of the electrically conductive polymer serves to compensate for electric charge in the oxidation and the reduction of the electrode active material.

Therefore, the power storage device in the present invention has an ion migration mechanism of rocking chair-type, thereby reducing the needed amount of anion in the electrolyte solution functioning as a dopant. As a result of this, the power storage device can exhibit good characteristics even when the amount of use of the electrolyte solution is small.

The rocking chair-type mechanism of the electrically conductive polymer having a carboxylic acid group is shown below taking poly(aniline-co-3-aminobenzoic acid) as an example.

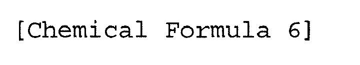

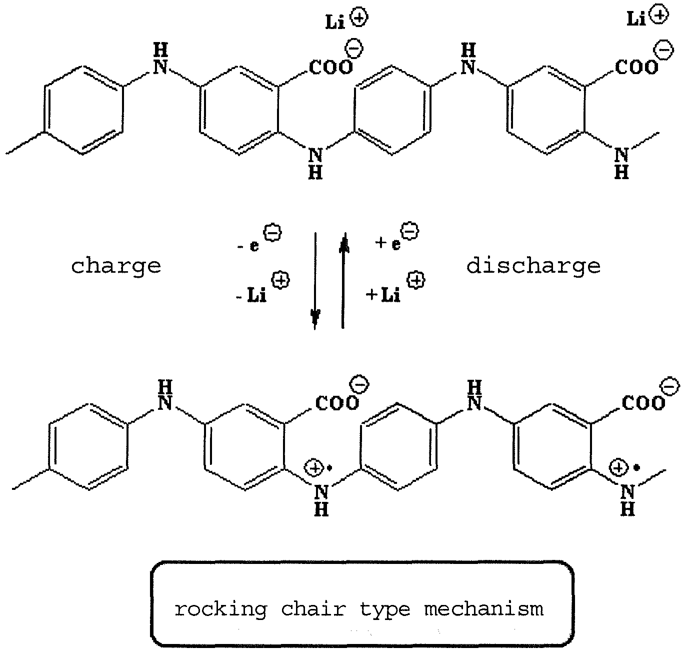

As will be clear from the above-described rocking chair-type mechanism, in the positive electrode containing the electrically conductive polymer of the present invention in which the carboxylic acid group is covalently bonded to the main chain, one electron is extracted from the unshared electron pair of the nitrogen of a polyaniline during the charging and, in order to compensate for the positive electric charge of the cation radical generated as a result of this, the carboxylate anion of the carboxylic acid covalently bonded to the main chain interacts and thereby maintains the electrically neutral state of the whole molecule. As a result of this, the residual lithium cation is released from within the positive electrode and migrates towards the negative electrode side.

Conversely, during the discharging, the cation radical on the nitrogen of a polyaniline is reduced to receive one electron, whereby the unshared electron pair is regenerated to render the electric charge neutral. As a result of this, the carboxylate anion remains and, in order to render this anion electrically neutral, the lithium cation comes in from the negative electrode side and thereby maintains the electrically neutral state of the whole molecule as a lithium carboxylate salt.

In the present invention, the carboxylic acid is fixed by covalent bond to the polymer main chain, so that lithium cation insertion/desertion by charging/discharging such as described above occurs. However, in the case of an unsubstituted polyaniline, the behavior will be totally different.

In other words, in the case of an unsubstituted polyaniline, it is the supporting electrolyte anion in the electrolyte solution that compensates for the positive electric charge of the cation radical generated on the nitrogen of a polyaniline generated during the charging and, in particular, when LiBF₄ is used as the supporting electrolyte, it is the BF₄ anion that compensates for the positive electric charge. In this case, during the discharging, the cation radical on the nitrogen of a polyaniline undergoes one-electron reduction to be neutral, and the residual BF₄ anion merely goes out from the positive electrode, so that the lithium cation does not come into the positive electrode.

Therefore, in a secondary battery using, as a positive electrode, the electrically conductive polymer of the present invention in which the carboxylic acid group is covalently bonded to the inside of the main chain, it is possible to verify whether the above rocking chair mechanism is functioning or not by sufficiently cleaning with a solvent the electrolyte solution adhered onto the electrode after discharging and then analyzing the electrolyte solution so as to examine the presence or absence of lithium. In other words, it is possible to say that the rocking chair mechanism is functioning when lithium disappears after charging and lithium increases in amount after discharging.

Whether this rocking chair mechanism is functioning or not can be actually verified by TOF-SIMS (time-of-flight secondary ion mass spectrometer) analysis using the secondary batteries of Examples described later (see Example 2 described later).

A conventional lithium secondary battery including a positive electrode made of an electrically conductive polymer functions by a reserve type mechanism in which the electrolyte anion is inserted/deserted during the charging/discharging, thereby necessitating a large amount of an electrolyte solution in order to maintain this entering and exiting electrolyte ion to be in a dissolved state. For this reason, the weight of the whole battery increases, which causes the greatest disadvantage that the weight energy density decreases. This large problem is solved by the secondary battery including the positive electrode made of the electrically conductive polymer of the present invention in which the carboxylic acid group is covalently bonded in the main chain, thereby giving a large significance in that a lithium secondary battery including a positive electrode made of an electrically conductive polymer functions with an extremely small amount of an electrolyte solution.

Here, the electrode according to the present invention can be used for either of the positive electrode or the negative electrode of the power storage device; however, above all, the electrode is preferably used as the positive electrode. In other words, the electrode according to the present invention can be used for either of a positive electrode 2 or a negative electrode 4 of a power storage device having an electrolyte layer 3 and a pair of electrodes provided in opposed relation with the electrolyte layer 3 interposed therebetween, as shown in FIG. 1; however, the electrode is preferably used as the positive electrode 2. Hereafter, with respect to a case in which the electrode of the power storage device according to the present invention is used as the positive electrode 2, a configuration of the power storage device will be described.

### <Electrolyte Layer>

The electrolyte layer of the power storage device according to the present invention is formed from an electrolyte. For example, a sheet including a separator impregnated with an electrolyte solution or a sheet made of a solid electrolyte is preferably used. The sheet made of the solid electrolyte per se functions as a separator.

The electrolyte includes a solute and, as necessary, a solvent and various kinds of additives. Preferred examples of the solute include compounds prepared by combining a metal ion such as a lithium ion with a proper counter ion such as a sulfonate ion, a perchlorate ion, a tetrafluoroborate ion, a hexafluorophosphate ion, a hexafluoroarsenic ion, a bis(trifluoromethanesulfonyl)imide ion, a bis(pentafluoroethanesulfonyl)imide ion, or a halide ion. Specific examples of the solute include LiCF₃SO₃, LiClO₄, LiBF₄, LiPF₆, LiAsF₆, LiN(SO₂CF₃)₂, LiN(SO₂C₂F₅)₂, and LiCl.

Examples of the solvent to be used as necessary include nonaqueous solvents, that is, organic solvents, such as carbonates, nitriles, amides, and ethers. Specific examples of the organic solvents include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane, and γ-butyrolactone, which may be used either alone or in combination. A solution prepared by dissolving the solute in the solvent may be referred to as "electrolyte solution."

### <Negative Electrode>

The negative electrode of the power storage device according to the present invention is formed from a negative electrode active material capable of ion insertion/desertion. Preferable examples of the negative electrode active material to be used include metal lithium, carbon materials and transition metal oxides capable of insertion and desertion of lithium ions in oxidation and reduction, silicon, and tin. Also, in the present invention, the term "use" is meant to include not only a case in which a forming material is singly used but also a case in which the forming material and other forming materials are used in combination. Typically, the ratio of using the other forming materials is set to be less than 50 wt% of the forming material.

In the present invention, the separator is used in addition to the positive electrode, the electrolyte layer, and the negative electrode, as described above. Such a separator can be used in various forms. The separator to be used is preferably an insulative porous sheet which is capable of preventing an electrical short circuit between the positive electrode and the negative electrode, is electrochemically stable, and has a higher ionic permeability and a certain mechanical strength. Therefore, exemplary materials for the separator include paper, nonwoven fabric, porous sheets made of a resin such as polypropylene, polyethylene, or polyimide, which may be used either alone or in combination. Also, as described above, in the case in which the electrolyte layer is a sheet made of a solid electrolyte, the electrolyte layer per se functions as the separator, so that there is no need to provide another separator.

### <Power storage device>

The power storage device of the present invention may be shaped in a laminate cell, a porous sheet form, a sheet form, a square form, a cylindrical form, or a button form.

The power storage device of the present invention has an excellent capacity density such that the capacity density per unit weight of the electrode active material is typically 70 mAh/g or more, and is 100 mAh/g or more.

The reason why the power storage device of the present invention has such a high capacity is as follows. By introduction of an electrically conductive polymer having a carboxylic acid group into the electrode, this carboxylic acid is placed as a dopant anion in a neighborhood of the main chain of the electrically conductive polymer and therefore is present as a fixed dopant in the electrode. Further, the carboxylic acid thus fixed and placed in the neighborhood of the main chain of the electrically conductive polymer is used for electric charge compensation during the oxidation and reduction of the electrode active material. As a result of this, the power storage device can exhibit good characteristics even when the amount of use of the electrolyte solution is small.

Moreover, the power storage device of the present invention, like the electric double layer capacitor, is excellent in high-speed charge/discharge characteristics because the electrically conductive polymer having a carboxylic acid group described above is used in the electrode of the power storage device. In addition, the power storage device of the present invention has a higher capacity density than that of the conventional electric double layer capacitor. Therefore, the power storage device according to the present invention may be a kind of a capacitor-type secondary battery.

### EXAMPLES

Inventive examples will hereinafter be described in conjunction with comparative examples. However, the present invention is not limited to these examples.

### [Example 1]

### <Preparation of Positive Electrode>

### [Preparation of poly(aniline-co-3-aminobenzoic acid) powder obtained by copolymerizing aniline and 3-aminobenzoic acid]

As the electrically conductive polymer having a carboxylic acid group, a poly(aniline-co-3-aminobenzoic acid) powder was prepared in the following manner.

Into a 1-L glass beaker, 348.4 g of ion-exchanged water was put, and 215.4 g (1.03 mol) of a 42 wt% aqueous solution of tetrafluoroboric acid (manufactured by Wako Pure Chemical Industries, Ltd., analytical-grade reagent) was added thereto, followed by stirring with a magnetic stirrer for mixing. To the resulting solution, 12.0 g (0.129 mol) of aniline (manufactured by Wako Pure Chemical Industries, Ltd., analytical-grade reagent) and 17.7 g (0.129 mol) of 3-aminobenzoic acid (manufactured by Tokyo Chemical Industry Co., Ltd., first-grade reagent) were added, and the resultant mixture was stirred for dissolution, whereby aniline and 3-aminobenzoic acid were completely dissolved in water by forming a salt with tetrafluoroboric acid.

This mixture solution was transferred to a 1-L separable flask equipped with a mechanical stirrer, and this was set in a cooling tank having a jacket made of stainless steel. The cooling tank was connected to a refrigerant incubator, and a cooling medium of -10°C was circulated. While continuing the stirring, an aqueous solution of an oxidizing agent obtained by dissolving 58.8 g (0.258 mol) of ammonium peroxodisulfate in 109.2 g of ion-exchanged water was dropwise added slowly at a dropping speed of 0.1 mL/minute into the separable flask with use of a tube pump. During that time, the dropwise addition was carried out while paying attention to keep the polymerization solution temperature at 0°C or lower.

After addition of the aqueous solution of the oxidizing agent in about 2 hours, the cooling was stopped and, in that state, the stirring was continued further for 2 hours. Thereafter, the contents in the separable flask were subjected to suction filtration using No. 2 filter paper (manufactured by ADVANTEC Corporation), so as to separate the copolymer powder of aniline and 3-aminobenzoic acid, that is, the poly(aniline-co-3-aminobenzoic acid) powder, by filtration. The copolymer powder was washed with a 15 wt% aqueous solution of tetrafluoroboric acid. Subsequently, after washing by stirring two times in methanol, the powder was subjected to vacuum drying for 15 hours at room temperature. The yield after the drying was 19.3 g. This powder was shaped into a disk form using a tablet forming machine for IR, and subjected to four-point electrical conductivity measurement by the Van der Pauw method. The electrical conductivity was 2.4 S/cm.

A binder polymer dispersion liquid was prepared by mixing 5.2 g of a 48 wt% styrene/butadiene copolymer rubber (SBR) emulsion (TRD2001 manufactured by JSR Co., Ltd.) and 30.3 g of a 19.8 wt% aqueous solution of polyvinylpyrrolidone (PVP) (K-90W manufactured by Nippon Shokubai Co., Ltd.), adding 7 g of ion-exchanged water, and forming a homogeneous solution with use of an ultrasonic homogenizer. After 4 g of the copolymer powder of aniline and 3-aminobenzoic acid obtained above and 0.547 g of acetylene black (DENKABLACK manufactured by Denki Kagaku Kogyo Kabushiki Kaisha), which is an electrically conductive carbon black, were mixed in a powder state, the obtained mixture was added into 4.63 g of the binder polymer dispersion liquid made of SBR and PVP prepared above. The resultant mixture was mixed by mixing with a spatula and thereafter subjected to dispersion mixing with an ultrasonic homogenizer (UP-200S manufactured by Hielscher Co., Ltd.), thereby a viscous electrode paste was prepared. The obtained paste was defoamed with use of a vacuum suction bell jar and a rotary pump.

The paste thus defoamed was applied onto an etched aluminum foil (30CB manufactured by Hohsen Corporation) having a width of 150 mm and a thickness of 30 µm for an electric double layer capacitor with a film applicator (SA-204) equipped with a micrometer using a desktop automatic coater (PI-1210 manufactured by Tester Sangyo Co., Ltd.). The resultant was left to stand at room temperature for 45 minutes and thereafter dried on a hot plate of 100°C. Thereafter, the resultant was pressed for 5 minutes at a temperature of 140°C and under a pressure of 15.2 kgf/cm² (1.5 MPa) with use of a vacuum pressing machine (KVHC-PRESS manufactured by Kitagawa Seiki Co., Ltd.), thereby a sheet-shaped polarizable electrode (positive electrode sheet) was obtained.

This positive electrode sheet was stamped out into a circular shape with use of a 15.95 mmφ stamping machine. The thickness of the electrode active material layer obtained by subtracting the aluminum foil thickness was 397 µm; the weight of the electrode active material layer excluding the aluminum foil current collector part was 8.4 mg; and the porosity of the electrode active material layer was 91.5%.

As the true density (true specific weight) of each constituent material used in calculating the above porosity, calculation was made assuming the true density of poly(aniline-co-3-aminobenzoic acid) to be 1.2 (including the dopant), that of DENKABLACK (acetylene black) to be 2.0, that of styrene/butadiene copolymer rubber (SBR) to be 1.04, and that of polyvinylpyrrolidone (PVP) to be 1.0.

### <Preparation of Negative Electrode Material>

A metal lithium foil (coin-shaped metal lithium manufactured by Honjo Metal Co., Ltd.) having a thickness of 50 µm was prepared.

### <Preparation of Electrolyte Solution>

An ethylene carbonate/dimethyl carbonate solution containing lithium tetrafluoroborate (LiBF₄) at a concentration of 1 mol/dm³ (manufactured by Kishida Chemical Co., Ltd.) was prepared.

### <Preparation of Separator>

A nonwoven fabric (TF40-50 manufactured by Hohsen Corporation and having a porosity of 55%) was prepared.

### [Production of Electrode Cell]

First, before assembling into a cell, the above positive electrode sheet was stamped out into a disk shape to form a positive electrode with use of a stamping jig equipped with a stamping blade having a diameter of 15.95 mm. A metal lithium foil was prepared as a negative electrode, and a nonwoven fabric was prepared as a separator. As an electrolyte solution, an ethylene carbonate/dimethyl carbonate solution containing lithium tetrafluoroborate (LiBF₄) at a concentration of 1 mol/dm³ (manufactured by Kishida Chemical Co., Ltd.) was prepared. The electrolyte solution amount (mg) was set to be 4.5 times as large as the weight (mg) of poly(aniline-co-3-aminobenzoic acid) doped with tetrafluoroboric acid.

These were assembled into an HS cell made of stainless steel for a nonaqueous electrolyte solution secondary battery experiment manufactured by Hohsen Corporation in an ultrahigh-purity argon gas atmosphere in a glove box having a dew point of -100°C. The positive electrode and the separator were subjected to vacuum drying at 100°C for 5 hours in a vacuum drier before being assembled into the HS cell.

### (Storage Battery Performance)

Charging was carried out up to 3.8 V at an electric current value of 0.05 mA/cm². After the voltage of 3.8 V was attained, the charging was switched to constant-potential charging. After the charging, the battery was left to stand for 30 minutes and thereafter discharged at an electric current value of 0.05 mA/cm² until the voltage became 2 V. This process was repeated.

At the discharging rate of 0.05 C, the initial weight capacity density was 107 mAh/g. At the discharging rate of 0.2 C, the initial weight capacity density was 97 mAh/g. The result of a rate test as measured while changing the charging/discharging electric current value is shown in FIG. 2. Here, the weight capacity density at 0.2 C was used as a reference of the capacity retaining ratio (%).

### [Comparative Example 1]

### [Preparation of Electrically Conductive Polyaniline Powder Having Tetrafluoroboric Acid Anion As a Dopant]

To 138 g of ion-exchanged water contained in a 300-mL volume glass beaker, 84.0 g (0.402 mol) of a 42 wt% aqueous solution of tetrafluoroboric acid (manufactured by Wako Pure Chemical Industries, Ltd., analytical-grade reagent) was added. Then, 10.0 g (0.107 mol) of aniline was added to the resulting solution while the solution was being stirred with a magnetic stirrer. Immediately after the addition of aniline to the aqueous solution of tetrafluoroboric acid, aniline was dispersed in an oily droplet form in the aqueous solution of tetrafluoroboric acid, and then dissolved in water within several minutes to provide a homogeneous transparent aqueous solution of aniline. The aqueous solution of aniline thus provided was cooled to -4°C or lower with use of a refrigerant incubator.

Then, 11.63 g (0.134 mol) of a powdery manganese dioxide oxidizing agent (manufactured by Wako Pure Chemical Industries, Ltd., first-grade reagent) was added little by little to the aqueous solution of aniline, while the mixture in the beaker was kept at a temperature of not higher than -1°C. Immediately after the oxidizing agent was thus added to the aqueous solution of aniline, the color of the aqueous solution of aniline turned dark green. Thereafter, the solution was continuously stirred, whereby generation of a dark green solid began.

After the oxidizing agent was added in 80 minutes in this manner, the resulting reaction mixture containing the reaction product thus generated was cooled and further stirred for 100 minutes. Thereafter, the resulting solid was subjected to suction filtration using No. 2 filter paper (manufactured by ADVANTEC Corporation) with use of a Buchner funnel and a suction bottle to provide a powder. This powder was washed in an aqueous solution of tetrafluoroboric acid having a concentration of about 2 mol/dm³ with stirring by means of a magnetic stirrer, then washed in acetone several times with stirring, and subjected to reduced-pressure filtration. The resulting powder was dried in vacuum at a room temperature for 10 hours. Thus, 12.5 g of an electrically conductive polyaniline containing a tetrafluoroboric acid anion as a dopant was obtained, which was a bright green powder. This powder was shaped into a disk form using a tablet forming machine for IR and subjected to four-point electrical conductivity measurement by the Van der Pauw method. The electrical conductivity was 19.5 S/cm.

A black water dispersion liquid was obtained in the same manner as in Example 1 by using 4.0 g of the obtained polyaniline powder in a doped state instead of the poly(aniline-co-3-aminobenzoic acid) of Example 1.

Thereafter, a positive electrode sheet was produced by using the above binder in the same manner as in Example 1. The thickness of this composite sheet was 275 µm, and the porosity was 47%.

As the true density (true specific weight) of each of the constituent materials used in calculating the above porosity, calculation was made assuming the true density of a polyaniline to be 1.2 (including the dopant), that of DENKABLACK (acetylene black) to be 2.0, that of styrene/butadiene copolymer rubber (SBR) to be 1.04, and that of polyvinylpyrrolidone (PVP) to be 1.0.

Thereafter, these were incorporated into an HS cell in the same manner as in Example 1 to assemble a lithium secondary battery, and the battery characteristic thereof was evaluated. At the charging/discharging rate of 0.05 C, the initial weight capacity density was 100 mAh/g. At the charging/discharging rate of 0.2 C, the initial weight capacity density was 91 mAh/g. The result of a rate test as measured while changing the charging/discharging electric current value is shown in FIG. 2 together with that of Example 1.

As is widely known, in the case in which the battery capacity is X (mAh), the electric current value when the total capacity is discharged in 1 hour is X (mA), and the charging/discharging rate is 1 C. Here, C is the initial letter of the term "capacity." Therefore, the electric current value of 2 C charging/discharging is 2X (mA) and, in this case, the charging/discharging is ended in 1/2 hour, that is, in 30 minutes. The electric current value of 10 C charging/discharging is 10X (mA) and, in this case, the charging/discharging is ended in 1/10 hour, that is, in 6 minutes. The fact that the battery can be charged and discharged up to a large value of C indicates that the output of the battery is extremely large, and means that high-speed charging/discharging can be made.

The weight capacity density of the storage battery of Comparative Example 1 was a high capacity density of 100 mAh/g. However, as will be clear from the result shown in FIG. 2, in the rate test, it became almost impossible to take out the capacity at 5 C.

On the other hand, the storage battery assembled in Example 1 can be charged and discharged at an extremely high discharging rate of 10 C or more, and hence was found to be a battery having an extremely high output characteristic.

Also, the weight capacity density of the battery cell of Example 1 is a sufficiently large value, and it has been found out that a larger capacity density can be obtained as compared with that of the electric double layer capacitor.

Therefore, it will be understood that a novel power storage device providing high-speed charging/discharging and having an excellent high capacity density can be obtained when a self-doping electrically conductive polymer having a carboxylic acid group in which a carboxylic acid is bonded to an electrically conductive polymer chain is used as a material for forming an electrode.

Also, the electrically conductive polymer may be used not only in an oxidized-doped state such as in the above-described case of the self-doping polyaniline of Example 1 but also in a reduced-dedoped state as shown in the following.

### [Example 2]

### [Preparation of Reduced Carboxylic Acid Type Self-doping Polyaniline Powder]

Into a 2-L glass beaker, 1,020 g of ion-exchanged water was put, and 376.3 g (1.8 mol) of a 42 wt% aqueous solution of tetrafluoroboric acid was added thereto, followed by stirring with a magnetic stirrer to form a homogeneous mixture. With stirring, a powder of 54.86 g (0.40 mol) of 3-aminobenzoic acid was added and dissolved in this aqueous solution of tetrafluoroboric acid. Initially, the resultant was in a suspension state; however, the powder was dissolved within several minutes to form a transparent solution having a light ocherous color. Thereinto, 18.6 g (0.20 mol) of aniline was added and dissolved by stirring. Initially, the resultant was in a state in which oily droplets had been dispersed; however, the mixture became a homogeneous transparent aqueous solution within several minutes. From the beaker containing the aqueous solution of tetrafluoroboric acid in which these monomers had been dissolved, the contents were transferred into a 3-L cylindrical separable flask made of glass and equipped with a stirring rod having two blades of an anchor-type stirring blade and a flat-plate stirring blade, followed by stirring. This separable flask was placed into an outer bath connected to a refrigerant circulator and cooled to 3°C.

As an aqueous solution of an oxidizing agent, 136.92 g (0.6 mol) of ammonium peroxodisulfate was dissolved in 254.3 g of ion-exchanged water to prepare a 35 wt% aqueous solution. The solution was colorless and transparent.

While keeping the temperature of the reaction mixture in the separable flask to be 2 to 4°C, the aqueous solution of the oxidizing agent was added little by little at a dropping speed of 1 mL/minute into the aqueous mixture solution of aniline/3-aminobenzoic acid with use of a tube pump, so as to perform oxidation polymerization. The outer bath temperature was 1°C. The stirring speed of the separable flask was set to be 300 rpm. Initially, the aqueous mixture solution of aniline/3-aminobenzoic acid had a light ocherous color; however, after about 35 minutes, the color of the reaction solution gradually came to turn greener. Then, the color turned dark green and, after 15 minutes from the color change, a dark green powder began to be generated. In the reaction mixture liquid, a temperature rise was seen, during the period from the addition of the oxidizing agent to the generation of the dark green powder, from 2°C before addition of the oxidizing agent to 8°C caused by polymerization heat generation of the oxidation polymerization of aniline.

After the whole of the oxidizing agent was dropwise added in 2 hours, the stirring was further continued with cooling, whereby the polymerization was carried out for a sum of 5.5 hours, and then the polymerization was ended. Thereafter, with use of a Buchner funnel and a suction bottle and with use of a hydrophilized membrane filter "Omnipore Membrane Filter" made of PTFE and having an average pore diameter of 0.2 µm (purchased from AS ONE Corporation), the obtained solid was subjected to suction filtration by means of the Buchner funnel to obtain a dark green electrically conductive powder. This powder was washed with methanol with stirring three times, washed with water two times, and washed with acetone two times. Then, the obtained powder was subjected to vacuum drying at 35°C for 17 hours in a vacuum drier, so as to obtain 20.0 g of the copolymer of aniline and 3-aminobenzoic acid in a doped state as a dark green powder. The powder was subjected to four-point electrical conductivity measurement by the Van der Pauw method, with the result that the electrical conductivity was 3.3 × 10⁻⁴ S/cm.

The carboxylic acid type self-doping polyaniline was, in a doped state, not dissolved in any of methanol, acetone, and water. Therefore, by washing with methanol and washing with water in a doped state, the unreacted monomers can be washed as well.

This copolymer was dedoped with lithium hydroxide and further reduced with hydrazine monohydrate to prepare an aqueous solution of the copolymer. In order to remove low-molecular-weight contaminants from this aqueous solution sample, a gel filtration treatment and an evaporator concentration drying-and-solidifying treatment were carried out to obtain a self-doping polyaniline powder.

The gel filtration treatment was carried out in the following manner. To a glass beaker, 200 g of ion-exchanged water was put, and then 1.06 g (0.0443 mol) of lithium hydroxide was dissolved in this with stirring by a magnetic stirrer. Into this, 10 g of the above copolymer was added and stirred. The color of the solution was dark blue. Further into this, 0.92 g (0.018 mol) of hydrazine monohydrate was added, and the stirring was continued. A reduction reaction of the quinonediimine structure moiety of the self-doping polyaniline occurred, whereby a large amount of bubbles were generated by the generated nitrogen gas. The color of the reaction solution was dark brown. The stirring was continued for 4 hours, so as to dissolve the copolymer completely. Thereafter, the obtained reaction liquid was subjected to suction filtration with use of a Buchner funnel type glass filter (11G-2 glass filter manufactured by Sogo Laboratory Glass Works Co., Ltd.), with the result that no undissolved part remained on the glass filter.

As the gel filtration material, "Sephadex 10-G" (cutoff molecular weight of 1,000) manufactured by GE Healthcare Japan Co., Ltd. was used. Thus, the low-molecular-weight contaminants having a molecular weight of 1,000 or less including the unreacted monomers, which are contained in the aqueous solution of the self-doping polyaniline, can be removed from within the aqueous solution. As a column to be filled with this, a 85 mmφ glass column equipped with a sintered glass filter and a cock in the lower part and having a height of 500 mm and a volume of 2,500 mL was used, and this was filled with the gel filtration material for use.

The aqueous solution of the self-doping polyaniline in a reduced state, which had been obtained by performing a treatment with lithium hydroxide and a reduction treatment with hydrazine on the self-doping polyaniline, was put into this glass column filled with the gel filtration material through the upper part thereof, whereby the dark brown aqueous solution of the self-doping polyaniline in the reduced state fell in a layer form from the upper part of the dark gray gel filtration material. While closely watching the boundary thereof, collection of the gelfiltered product was started at a timing at which a dark brown band came out from the lower part of the column.

When there is no more liquid in the upper part of the filling material, outflow of the liquid from the lower part of the column stops. When this occurs, the ion-exchanged water is poured through the upper part of the column, so as to promote the outflow of the gel filtration treated liquid. The end point of the treated liquid was determined by regarding the fraction that flows out before a low-molecular-weight alkaline substance begins to flow out to be an outflow fraction of the main purified substance (purified aqueous solution fraction) while checking the depth of the dark brown color of the liquid flowing out and the pH value of the liquid flowing out with use of pH test paper.

The collected purified aqueous solution fraction was concentrated, dried, and solidified by an evaporator, whereby 14.2 g of an isolated powder of reduced carboxylic acid type self-doping polyaniline was obtained as an end product.

### (Production of Secondary Battery)

Next, description will be given on the characteristic of a lithium secondary battery including, as a positive electrode, the obtained self-doping polyaniline to which a carboxylic acid group is covalently bonded.

Into an agate mortar, 112 mg of the self-doping polyaniline in a reduced-dedoped state obtained in the above-described manner was put together with 112 mg of acetylene black (DENKABLACK manufactured by Denki Kagaku Kogyo Kabushiki Kaisha) serving as a conductive agent and 25 mg of a PTFE (tetrafluoroethylene) powder of a binder polymer (F-102 manufactured by Daikin Industries, Ltd.), and the mixture was kneaded well until the material was extended in a seaweed shape. From the kneaded material, 100 mg thereof was taken and shaped into a sheet form using a tablet forming machine for forming a tablet having a diameter of 13 mmφ. From the obtained sheet, a part having a weight of 25 mg was cut out for use as a positive electrode for the battery. This was subjected to vacuum drying at 100°C for 2 hours in a vacuum drier placed in a dry room having a dew point of -55°C, and thereafter the electrode weight was measured with precision. The electrode active material weight was set to be 45 wt% of the dried weight of this on the basis of the blending ratio.

In the same manner as in Example 1, coin-shaped metal lithium of 15.5 mmφ serving as a negative electrode, a nonwoven fabric separator TF40-50, and the positive electrode thus produced were assembled up in this order with use of an HS cell made of stainless steel in a glove box having a dew point of -100°C. As an electrolyte solution, 100 µL of an ethylene carbonate/dimethyl carbonate solution of lithium hexafluorophosphate (LiPF₆) of 1 mol/dm³ was poured into the cell after the metal lithium of the negative electrode and the nonwoven fabric separator thereon were set. Then, the positive electrode was set thereon, and an upper lid was mounted, followed by fastening the cell with a screw to form a tightly closed structure.

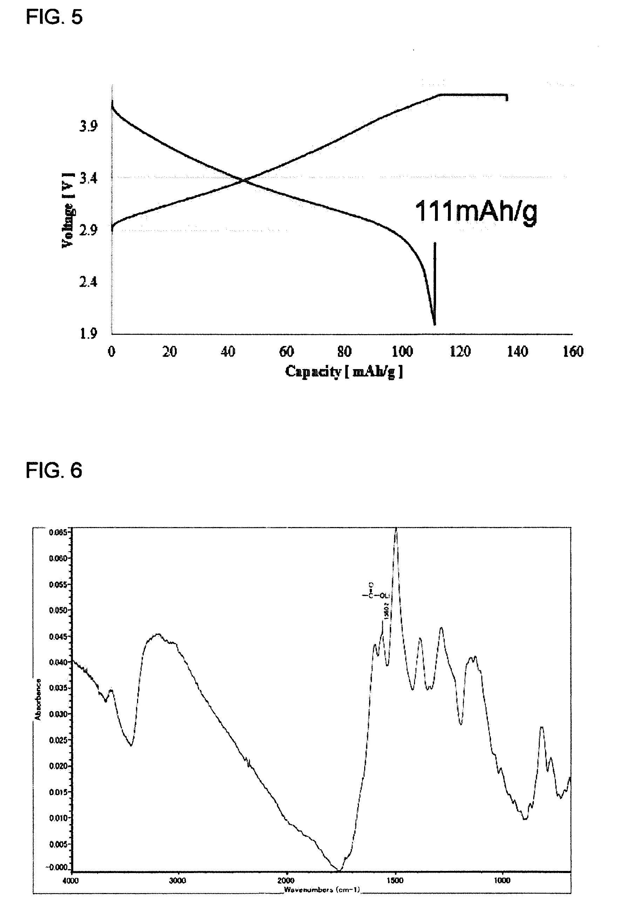

The charging and discharging conditions were as follows. The upper limit of the charging voltage was set to be 4.2 V, and the lower limit of the discharging voltage was set to be 2.0 V. As the electric current value, the battery was charged at a constant electric current of 0.04 mA/cm². When the upper limit of the charging voltage was attained, the charging was switched to constant-voltage charging. At the time point at which the electric current value lowered to 20% of the initial value, the battery was left to stand in a rest mode. After 30 minutes, the battery was then discharged at the same constant electric current as in the charging period until the lower limit of the discharging voltage was attained. FIG. 5 shows a charging/discharging curve during this period. The capacity density was 111 mAh/g. One of the batteries produced with n = 2 was kept at rest in a charged state, and the other one was kept at rest in a discharged state. Subsequently, these cells were disassembled in a glove box, and the positive electrodes were taken out. After the positive electrodes were washed three times with ethylene carbonate/dimethyl carbonate which is the solvent of the electrolyte solution, the positive electrodes were put into an aluminum laminate film and heat-sealed. Then, the positive electrodes were each subjected to TOF-SIMS analysis.

### [Comparative Example 2]

A polyaniline without having a carboxylic acid group was obtained in the same manner as in Example 2 except that 3-aminobenzoic acid was not used in Example 2. Further, a final lithium battery was produced using this polyaniline.

### [Example 3]

A self-doping polyaniline in a reduced-dedoped state was obtained in the same manner as in Example 2 except that 54.86 g (0.40 mol) of 2-aminobenzoic acid was used instead of 54.86 g (0.40 mol) of 3-aminobenzoic acid in Example 2.

### [Example 4]

Into a 3-L glass beaker, 2,043 g of ion-exchanged water was put, and 188.2 g (0.9 mol) of a 42 wt% aqueous solution of tetrafluoroboric acid was added thereto, followed by stirring with a magnetic stirrer to form a homogeneous mixture. With stirring, a powder of 36.23 g (0.20 mol) of 5-aminoisophthalic acid was added and dissolved in this aqueous solution of tetrafluoroboric acid. Initially, the resultant was in a suspension state; however, the powder was dissolved within several minutes to form a colorless and transparent solution. Thereinto, 9.31 g (0.10 mol) of aniline was added and dissolved by stirring. Initially, the resultant was in a state in which oily droplets had been dispersed; however, the mixture became a homogeneous transparent aqueous solution within several minutes. From the beaker containing the aqueous solution of tetrafluoroboric acid in which these monomers had been dissolved, the contents were transferred into a 3-L cylindrical separable flask made of glass and equipped with a stirring rod having two blades of an anchor-type stirring blade and a flat-plate stirring blade, followed by stirring. This separable flask was placed into an outer bath connected to a refrigerant circulator and cooled to 10°C.

As an aqueous solution of an oxidizing agent, 62.6 g (0.3 mol) of a 42% aqueous solution of tetrafluoroboric acid (manufactured by Wako Pure Chemical Industries, Ltd., analytical-grade reagent) was dissolved in 211 g of ion-exchanged water, and further 68.46 g (0.3 mol) of ammonium peroxodisulfate was added and dissolved, thereby a 20 wt% solution was prepared. The solution was colorless and transparent.

Thereafter, a self-doping polyaniline in a reduced-dedoped state was obtained in the same manner as in Example 2.

By using Examples 2 to 4 and Comparative Example 2 obtained as described above, the following analysis and measurement were carried out.

### <TOF-SIMS Analysis>

A TOF-SIMS (Time-of-flight secondary ion mass spectrometer) is a mass spectrometer by which chemical information of atoms and molecules on a solid sample can be measured at a sensitivity of one molecule layer or less, and a specific molecular or atomic distribution can be observed at a space resolution of 100 nm or less. The TOF-SIMS is one of the secondary ion mass spectrometry (SIMS) methods in which primary ion beams are radiated onto a solid sample, and the ions (secondary ions) released at that time from the topmost surface of the sample are detected, and is referred to as TOF-SIMS because a time-of-flight mass spectrometer (TOF-MS) is used as the mass spectrometer.

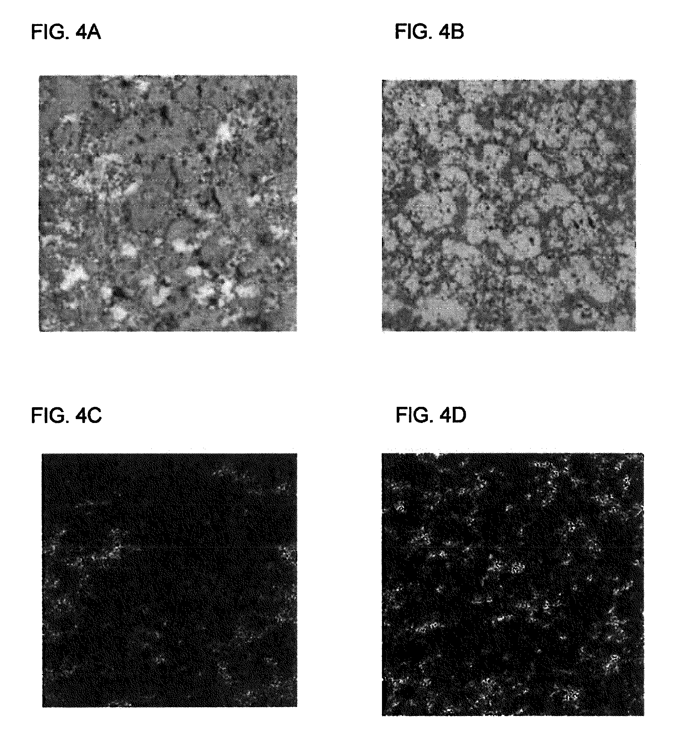

First, in order to definitely determine the position serving as an object of TOF-SIMS analysis, FIGS. 3A-3D and 4A-4B in the upper row show optical microscope photographs (OM images) of the positive electrodes, which have been taken out from lithium secondary batteries in a charged rest state and in a discharged rest state, and show TOF-SIMS mapping images of Li ion in the lower row. FIGS. 3A, 3C, 4A and 4C on the left side show the positive electrodes that have been taken out in the charged rest state, and FIGS. 3B, 3D, 4B and 4D on the right side show the positive electrodes that have been taken out in the discharged rest state [FIG. 3A: OM image when charged, FIG. 3B: OM image when discharged, FIG. 3C: TOF-SIMS image when charged, FIG. 3D: TOF-SIMS image when discharged].

FIG. 3 shows the result of analyzing a positive electrode sample of Example 2 obtained with use of the above TOF-SIMS, and FIG. 4 shows the result of analyzing a positive electrode sample of Comparative Example 2 with use of the same.

Whether the battery shown in the present examples is operating in the rocking chair mechanism or not can be determined by examining whether the lithium ions have returned with certainty to the inside of the polyaniline of the positive electrode when the battery is discharged, as described above.

Actually, this will be definitely clear by seeing how the Li ions are distributed in FIG. 3D. In other words, it will be seen that, in the polyaniline in the positive electrode of the battery in the charged rest state of FIG. 3C, almost no lithium ions are present, whereas in the polyaniline in the positive electrode of the battery in the discharged rest state of FIG. 3D, lithium ions are distributed uniformly over almost the whole surface. This clearly shows that the self-doping polyaniline having a carboxylic acid group in a state of being covalently bonded to the inside of the main chain skeleton shown in the present invention is charged and discharged by the rocking chair mechanism.

By this, the fundamental large problem of an electrically conductive polymer positive electrode such that, because a large capacity cannot be obtained unless the amount of electrolyte solution is increased, the weight energy density in the battery as a whole decreases, which problem has been conventionally pointed out in a lithium secondary battery having the electrically conductive polymer positive electrode, has been solved by using the self-doping polyaniline having a carboxylic acid group in a state of being covalently bonded to the inside of the main chain skeleton according to the present invention. In other words, since the battery of the present invention is a lithium secondary battery capable of being charged and discharged by the rocking chair mechanism, the battery operates as a secondary battery with an extremely small amount of electrolyte solution, whereby a breakthrough lithium secondary battery has been obtained such that the weight energy density in the battery as a whole including the weight of the electrolyte solution can be increased.

On the other hand, FIGS. 4A to 4D show a TOF-SIMS image of Comparative Example 2, which is an optical microscope image captured at a higher magnification than that of FIG. 3 [FIGS. 3A and 3C: about 300 µm × 300 µm, FIGS. 3B and 3D: about 220 µm × 220 µm, FIGS. 4A and 4C: about 60 µm × 60 µm, FIGS. 4B and 4D: about 44 µm × 44 µm]. This is because the average particle size of the unsubstituted polyaniline of Comparative Example 2 of FIGS. 4A to 4D is about several µm to 20 µm which is smaller than the average particle size (several µm to 70 µm) of the self-doping polyaniline of Example 2 of FIG. 3A to 3D. In the TOF-SIMS mapping image of the Li ion of FIG. 4C, it is natural that the lithium ions are absent in the inside of the polyaniline of the sample that is in rest in a charged state; however, it will be clear from FIG. 4D that the lithium ions are absent also in the inside of the sample that is in rest in a discharged state. This clearly shows that the lithium secondary battery of Comparative Example 2 having an unsubstituted polyaniline in the positive electrode is not charged or discharged by the rocking chair mechanism. At this time, this battery is operating in a reserve-type mechanism in which the hexafluorophosphoric acid anion in the electrolyte solution enters the inside of the polyaniline to render the polyaniline into a doped state when the battery is charged, whereas the hexafluorophosphoric acid anion goes out from the inside of the polyaniline into the electrolyte solution when the battery is discharged, whereby the battery is charged and discharged. This necessitates a large amount of hexafluorophosphoric acid anion, so that a large amount of electrolyte solution is needed. Therefore, the weight of the battery as a whole including the weight of the electrolyte solution increases and, for this reason, the weight energy density of this battery decreases.

### <FT-IR Spectrum>

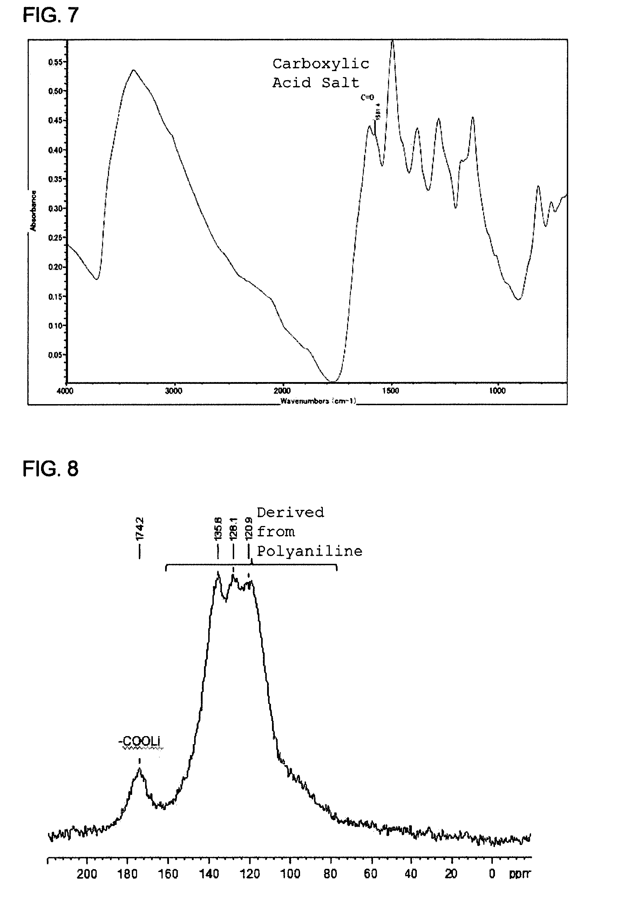

A self-doping polyaniline in a reduced-dedoped state obtained in Examples 2 to 3 obtained by the preparation described above was prepared. By using the KBr disk method, an FT-IR spectrum was obtained with use of a Fourier transform infrared spectrophotometer (NICOLET MAGNA 760 manufactured by Thermo Fisher Scientific Co., Ltd.). The spectrum corresponding to the polyaniline of Example 2 is shown in FIG. 6, and the spectrum corresponding to the polyaniline of Example 3 is shown in FIG. 7.

From the FT-IR spectra of FIGS. 6 and 7, it will be understood that a peak of a carboxylic acid salt is present at 1561 cm⁻¹ in addition to the peak of the polyaniline in a reduced state. On the other hand, the peak derived from a free carboxylic acid that is supposed to appear around 1700 cm⁻¹ is not seen. Therefore, it will be understood that this is an FT-IR spectrum of the self-doping polyaniline in which all of the carboxylic acids are turned into Li salts.

### <¹³ C-solid NMR Spectrum>

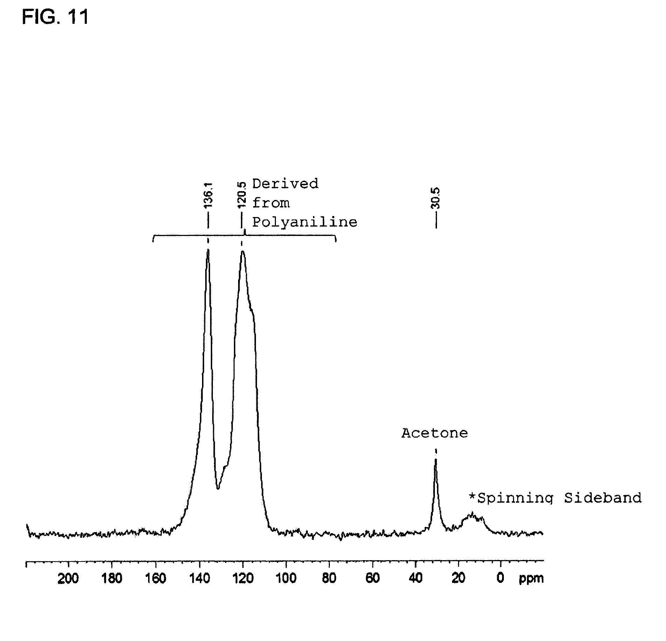

Also, by using the self-doping polyaniline powder of Examples 2 to 4, a ¹³C-solid NMR spectrum of the polyaniline powder was obtained by a ¹³C-solid NMR spectrum measurement apparatus (AVANCE 300 manufactured by Bruker Biospin Co., Ltd.), which is shown in FIGS. 8 to 10. Also, a ¹³C-solid NMR spectrum of the polyaniline powder of Comparative Example 2 without having a carboxylic acid is shown in FIG. 11.

From FIGS. 8 to 10 corresponding to Examples 2 to 4, it will be understood that a peak derived from C of the aromatic ring of the polyaniline in a reduced-dedoped state appears at 110 to 150 ppm. On the other hand, in FIG. 11 corresponding to Comparative Example 2 in which 3-aminobenzoic acid is not used, the peak of the carbonyl carbon of carboxylic acid salt does not appear at all at 175 ppm, whereas in FIGS. 8 to 10 corresponding to Examples 2 to 4, the peak clearly appears at 175 ppm. Therefore, it will be understood that the present polymer in Examples is a self-doping polyaniline in which a carboxylic acid salt is covalently bonded to the aromatic ring.

Here, the peak at 30.5 ppm of FIG. 11 is merely due to the remaining acetone which is a washing solvent at the time of polyaniline synthesis.

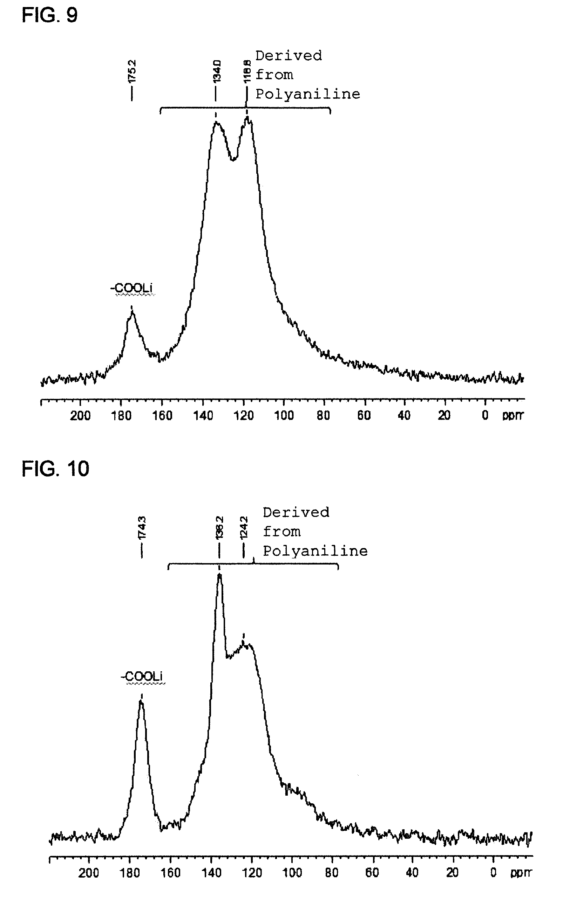

Also, from the ¹³C-solid NMR spectrum of Example 3 of FIG. 9, it has been found out that an aniline skeleton substituted with a carboxyl group is introduced at a high ratio of 60 mol% from the ratio of the peak at 175 ppm derived from the carboxyl group carbon to the peak derived from the other aromatic carbon. This will be easily understood by the fact that the peak of carbonyl carbon clearly appears at 175 ppm.

Further, from the ¹³C-solid NMR spectrum of Example 4 of FIG. 10, it has been found out that the content of aminoisophthalic acid residue in the copolymer is 43 mol% from the ratio of the peak 1 at 174 ppm derived from the carboxyl group carbon to the peak 2 derived from the other aromatic carbon. In this example, the reason why the peak area belonging to the carboxylic acid appearing at 174 ppm in the ¹³C-solid NMR spectrum is large is that, because copolymerization with aniline has been carried out using the amine of the isophthalic acid skeleton having two carboxylic acid groups per one aromatic ring, there is a carboxylic acid carbon amount which is two times as large as the content of the monomer residue. The copolymers obtained in the present examples had the largest carboxylic acid content among the copolymers of aniline and carboxylic-acid-containing aromatic amine obtained so far.

While specific forms of the embodiments of the present invention have been shown in the aforementioned inventive examples, the inventive examples are merely illustrative of the invention and are not limitative of the invention. It is contemplated that various modifications apparent to those skilled in the art could be made within the scope of the present invention.

The power storage device of the present invention can be advantageously used as a power storage device such as a lithium secondary battery and as a high-capacity capacitor. Also, the power storage device of the present invention can be used for the same applications as the prior art secondary batteries and electric double-layer capacitors, for example, for mobile electronic apparatuses such as mobile PCs, mobile phones, and personal digital assistants (PDAs), and for driving power sources for hybrid electric cars, electric cars, and fuel battery cars.

### EXPLANATION OF REFERENCES

- 1: CURRENT COLLECTOR (FOR POSITIVE ELECTRODE)
- 2: POSITIVE ELECTRODE
- 3: ELECTROLYTE LAYER
- 4: NEGATIVE ELECTRODE
- 5: CURRENT COLLECTOR (FOR NEGATIVE ELECTRODE)

## Claims

1. A power storage device comprising:
an electrolyte layer; and
a positive electrode and a negative electrode that are arranged with the electrolyte layer interposed therebetween,
wherein at least one of the positive electrode and the negative electrode contains a self-doping electrically conductive polymer having a carboxylic acid group.

2. A power storage device electrode containing a self-doping electrically conductive polymer having a carboxylic acid group.

3. A power storage device electrode porous sheet containing a self-doping electrically conductive polymer having a carboxylic acid group.
